# EUROPEAN PATENT SPECIFICATION

(11) **EP 2 654 474 B1**
(45) Date of publication and mention of the grant of the patent: **03.02.2016**
(21) Application number: 11851939.6
(22) Date of filing: 30.11.2011
(51) Int. Cl.: A41G 5/02, A61K 8/02, C08L 7/02

(54) **COSMETIC ADHESIVE COMPOSITION**
KOSMETISCHE HAFTZUSAMMENSETZUNG
COMPOSITION ADHÉSIVE COSMÉTIQUE

(30) Priority: 22.12.2010 US 201061426261 P
(43) Date of publication of application: 30.10.2013
(73) Proprietor: Avon Products, Inc., New York, NY 10017 (US)
(72) Inventor: CRUZ, Kathy, Riverdale New York 07457 (US); SLOBODY, Brent, New City New York 10956 (US); LEVINA, Galina, Nyack New York 10960 (US); RAOUF, Maha, Franklin Lakes, NJ 07417 (US)
(74) Representative: Dr. Weitzel & Partner
(86) International application number: PCT/US2011/062518
(87) International publication number: WO 2012/087510

(56) References cited:
- US-A1- 2006 013 840
- US-A1- 2007 265 408
- US-A1- 2008 196 732
- US-A1- 2008 300 526

## Description

### FIELD OF THE INVENTION

The present invention relates generally to compositions comprising non-allergenic latex, including latex derived from guayale. More particularly, the invention relates to an adhesive composition comprising non-allergenic latex for cosmetic application.

US 2007/265408 and US 2008/300526 each describe a none-allergenic, none-Hervea bioadhesive on the basis of guayule latex.

### BACKGROUND

A person's beauty or attractiveness can be increased by a full and voluminous set of eyelashes. False eyelashes and other cosmetic devices and materials have been used to enhance a person's appearance by providing a long, full and thick set of eyelashes on their own or by augmenting a person's natural eyelashes. However, false eyelashes need to be attached to the eyelid so that they do not dislodge or fall off during use.

Cosmetic adhesive compositions containing traditional rubber Hevea latex or nitrocellulose based formulations have been utilized to attach false eyelashes during use. However, such compositions contain ingredients to which a person can experience an allergic reaction.

It would be desirable to have a cosmetic adhesive that does not produce an allergic reaction. It would also be desirous to have a cosmetic adhesive that includes a non-allergenic latex. It would still further be desirous to have a cosmetic adhesive that includes a non-Hevea latex, such as guayule.

It is an object of the present invention to provide a cosmetic adhesive including a non-allergenic latex. It is another object of the present invention to provide a cosmetic adhesive latex. It is yet another object of the present invention to provide a method for attaching a false eyelash to a user's eyelid using a non-Hevea latex. It is yet still another object of the present invention to provide a method for attaching a false eyelash to a user's eyelid using a guayule latex.

### SUMMARY OF THE INVENTION

Some or all of these objects are provided for by the instant invention which, in the broadest aspect, relates to compositions comprising a non-allergenic latex. The compositions may be cosmetic compositions for application to a human integument, such as makeup or the like, or may be adhesive compositions for affixing cosmetic accessory, such as false eyelashes, fake nails and extensions, and the like. In a particular implementation, methods are provided for attaching a false eyelash to a person's eyelid comprising mounting said false eyelash to said eyelid with a non-allergenic latex, preferably, a non-Hevea latex, including, without limitation, a natural latex selected from the group consisting of guayule, gopher plant, mariola, rabbitbrush, milkweeds, goldenrods, pale Indian plantain, rubber vine, Russian dandelion, mountain mint, American germander and tall bellflower. In the preferred implementations, the natural latex is guayule latex.

Also provided is an adhesive composition comprising from about 15.0 wt % to about 40.0 wt % guayule latex solids; from about 0.1 wt % to about 20.0 wt % film forming agent; from about 0.1 wt % to about 10.0 wt % gellant; from about 1.0 wt % to about 9.0 wt % plasticizer; and water. The adhesive may further include about 0.01 wt % to about 15.0 wt % of a colorant comprising a pigment selected from the group consisting of iron oxide, carbon black, and mixtures thereof.

Also provided is a kit comprising: a cosmetic accessory, such as a false eyelash, one or more sets of false eyelashes; and a sealed container including an adhesive composition comprising the adhesive composition according to the invention.

### DETAILED DESCRIPTION OF THE INVENTION

The present invention provides a composition with a non-allergenic latex that is capable of a variety of applications including use as a cosmetic adhesive, for example in the attachment of false eyelashes, a peel-off lipstick, peel-off skincare mask with or without active ingredients, peel-off blush that contains a residual stain component for color building effects, water based nail enamel/ nail wear treatment products, and temporary skin or nail tattoos, or for use in cosmetics as a long-wear flexible film former, for example for use in cosmetics such as pigmented make-up foundations, flexible coat mascara or eye liner, and the like.

Non-allergenic latex includes compositions such as non-Hevea latex. Non-Hevea latex is a natural latex derived from natural sources other than Hevea, such as guayule, gopher plant, mariola, rabbitbrush, milkweeds, goldenrods, pale Indian plantain, rubber vine, Russian dandelion, mountain mint, American germander and tall bellflower as set forth in United States Patent Publication 2008/0300526 which is hereby incorporated by reference in its entirety. Since these natural latexes are not Hevea latex, they have the advantage that they do not contain the antigens that produce the type of allergic reaction that can be accompanied by the use of topically applied Hevea latex.

Particularly desirable is latex derived from Parthenium argentatum (commonly known as guayule) which is available commercially from the Yulex Corporation. This guayule latex product is an ultra-pure, high quality emulsion that is an alternative to Hevea materials. Guayule is a non-food industrial crop that is renewable, environmentally sustainable and is currently used in several medical applications. Guayule latex is available in either a potassium hydroxide base emulsion or an ammonia base emulsion each of which contain a minimum dry rubber content of about 49% and a maximum dry rubber content of about 56%, with a total solids minimum of about 50% and a total solids maximum of about 57%. The extraction processes are set forth in United States Patents 7,259,231 and 7,790,036, both of which are hereby incorporated by reference in their entirety.

The present invention includes an effective amount of non-allergenic latex to affix a cosmetic material or accessory to a person. Typically, such effective amount of the non-allergenic latex is a latex solids content of from about 1.0 percent by weight (wt %) to about 90 wt % of the total composition, preferably from about 15 percent by weight (wt %) to about 40 wt % of the total composition; and more preferably, from about 20 wt % to about 30 wt % of the total composition.

The present invention also may comprise an effective amount of one or more film forming agents, including hydrophilic and hydrophobic film forming agents. The film forming agents may be any material suitable for use in a cosmetic or personal care composition including, waxes, oils, and polyols, but is preferably a film forming polymer. The term film forming polymer may be understood to indicate a polymer which is capable, by itself or in the presence of at least one auxiliary film forming agent, of forming a continuous film which adheres to a surface, such as a human integument. Polymeric film forming agents include cellulosics, polyolefins, polyvinyls, polyacrylates, polyurethanes, silicones, silicone acrylates, polyamides, polyesters, fluoropolymers, polyethers, polyacetates, polycarbonates, polyimides, epoxys, formaldehyde resins, and homopolymers and copolymers of any of the foregoing; preferably, cellulosics, polyacrylate copolymers, and mixtures thereof. Preferably such effective amount of film forming agent is from about 0.1 wt % to about 20.0 wt % of the total composition; more preferably, from about 10.0 wt % to about 15.0 wt %.of the total composition.

The present invention also may include an effective amount of one or more gellants to provide a gel structure or form to the composition. The gellant should be a cosmetically acceptable gellant such as silica; hydroxyethylcellulose, methylcellulose, hydroxypropylmethylcellulose, hydroxypropylcellulose; cetyl hydroxyethylcellulose; guar gums; quaternized guar gums; nonionic guar gums; xanthan gums; carob gums; scleroglucan gums; gellan gums; rhamsan gums; karaya gums; alginates; maltodextrin; starches; hyaluronic acid and salts thereof; clays, including montmorillonites, hectorites and laponites; acrylates copolymer; crosslinked polyacrylic acid polymers; polyglyceryl(meth)acrylate polymers; polyvinylpyrrolidone; polyvinyl alcohol; crosslinked acrylamide polymers and copolymers; crosslinked methacryloyloxyethyltrimethyl ammonium chloride homopolymers; associative polymers including associative polyurethanes; and mixtures thereof; preferably crosslinked polyacrylic acid polymers, hydroxyethylcellulose, polyvinylpyrrolidone and mixtures thereof. Preferably such effective amount of gellant is from about 0.1 wt % to about 10.0 wt % of the total composition; more preferably, from about 0.1 wt % to about 5.0 wt % of the total composition.

Some gellants are known to be film forming agents as well and may be suitable in the practice of the present invention. In the event that the one or more gellants do not have such film forming properties, or if the gellant is not present in an amount sufficient to provide a suitable film, one or more film forming agents are incorporated.

The present invention also may comprise an effective amount of a plasticizer to increase the plasticity or fluidity of the composition. The plasticizer should be a cosmetically acceptable plasticizer such as dibutyl phthalate (DBP) and other phthalates; tributyl acetyl citrate and other citrates, ethyl toluene sulfonamide (ethyl tosylamide), n-cyclohexyl para-toluene sulfonamide, glycerol and other glycols including butylene glycol, propylene glycol, dipropylene glycol, hexylene glycol, glycol ethers, glycol esters, hydrogenated castor oil or epoxidized oils, polyesters, polybutylenes, low molecular weight aliphatic polyurethanes (about 2000 to about 10000 MW), toluene sulfonamide urea formaldehyde, γ-butyral lactone, n-butylphthalimide/isopropylphthalimide, ethylhexyl diphenyl phosphate, wool fat derivatives, chlorinated paraffins, glyceryl triacetate, camphor, and sucrose acetate isobutyrate (SAIB), and mixtures thereof, preferably butylene glycol, propylene glycol and mixtures thereof. Preferably such effective amount is from about 1.0 wt % to about 9.0 wt % of the total composition; more preferably, from about 2.0 wt % to about 5.0 wt % of the total composition.

The compositions of the present invention should leave a dry, smooth film upon topical application to the surface of an integument, including, the skin, hair, eyebrows, or eyelashes upon drying or evaporation of any volatiles. The film should also exhibit good adhesion and flexibility to the keratinous fibers and/or to the skin.

The present invention may optionally include pigments to enhance its appearance. The pigments should be a cosmetically acceptable pigments and/or colorants such as carbon black, FD&C dyes; D&C dyes including D&C Red, Nos. 2, 5, 6, 7, 10, 11, 12, 13, 30 and 34, D&C Yellow No. 5, Blue No. 1, Violet No. 2; metal oxides and metal hydroxides including magnesium oxide, magnesium hydroxide, calcium oxide, calcium hydroxides, aluminum oxide, aluminum hydroxide, iron oxides, red iron oxide, yellow iron oxide, black iron oxide, iron hydroxides, titanium dioxide, titanium lower oxides, zirconium oxides, chromium oxides, chromium hydroxides, manganese oxides, cobalt oxides, cerium oxides, nickel oxides and zinc oxides; composite oxides and composite hydroxides including iron titanate, cobalt titanate and cobalt aluminate; ultramarine blue including sodium aluminum silicate containing sulfur; Prussian blue, manganese violet, bismuth oxychloride, talc, mica, sericite, magnesium carbonate, calcium carbonate, magnesium silicate, aluminum magnesium silicate, silica, titanated mica, iron oxide titanated mica, bismuth oxychloride; and mixtures thereof. Preferably such pigments are present in an amount from about 0.01 wt % to about 15.0 wt % of the total composition; more preferably, from about 0.5 wt % to about 4.0 wt % of the total composition.

The present invention may also include one or more of the following functional ingredients: anesthetics, anti-allergenics, antifungals, antimicrobials, anti-inflammatories, antiseptics, chelating agents, depigmenting agents, emollients, fragrances, humectants, lubricants, moisturizers, pharmaceutical agents, preservatives, skin protectants, skin penetration enhancers, stabilizers, surfactants, vitamins, and compatible mixtures thereof. The functional ingredients are typically present in an amount effective to provide the intended function, generally from about 0.001 to about 10%, or about 0.01 to about 5%, or about 0.1 to about 5%, or about 1% by weight of the composition.

The present invention can be made using conventional methods that are known in the art for making cosmetic or personal care products. For example, a first premix may be prepared by dissolving the gellant in water at a slightly elevated temperature and with sufficient agitation to result in all of the gellant being dissolved. A second premix may be prepared under moderate temperature and shear by admixing the remaining components. After cooling the second premix to approximately the temperature of the first premix, the first and second premixes are admixed together with stirring. The combined mixture is then cooled to room temperature.

The examples set forth herein further describe and demonstrate embodiments within the scope of the present invention. The examples are given solely for the purpose of illustration and are not to be constructed as limitations of the present invention, as many variations thereof are possible without departing from the spirit and scope of the invention.

The present invention can be formulated into the adhesive composition set forth in Example 1 below and used to attach false eyelashes. A false eyelash is typically composed of a base on which is attached a plurality of false eyelash filaments. The filaments are normally of a color similar to the natural eyelashes of the person to which they will be applied. For the purpose of the present invention, a person may also include a doll, mannequin or other human figure on which the invention is used. Before application, the eyelid of the person is usually cleaned of make-up or other debris that could interfere with the adhesive properties of the present invention. A thin application of adhesive is then applied to the base of the false eyelash. Before the adhesive dries, the false eyelash is then applied to the eye lid on or substantially adjacent to the area of the eyelid from which the person's natural eyelashes normally radiate, preferably to blend into the natural eyelashes. The false eyelashes may be applied as a single base with multiple filaments or as multiple base sections, each such section including at least one filament.

As used herein, the term "consisting essentially of" is intended to limit the invention to the specified materials or steps and those that do not materially affect the basic and novel characteristics of the claimed invention, as understood from a reading of this specification. All percentages are by weight based on the total weight of the composition, unless otherwise indicated.

### EXAMPLE 1

| False Eyelash Adhesive | | |
|---|---|---|
| Ingredient | Wt % | Wt % |
| Demineralized Water | 39.18 | 39.18 |
| Carbopol 940 | 0.26 | 0.26 |
| Hydroxyethylcellulose HHR 250 | 0.45 | 0.45 |
| Disodium EDTA | 0.2 | 0.2 |
| Propylene Glycol | 0.45 | 0.45 |
| Butylene Glycol | 1.75 | 1.75 |
| Triethanolamine 99% | 0.53 | 0.53 |
| Polyvinylpyrrolidone | 0.12 | 0.12 |
| Citric Acid | 0.01 | 0.01 |
| Phenethyl Alcohol/Caprytyl Glycol-BL | 0.8 | 0.8 |
| Yulex Natural Rubber Emulsion KOA¹ | 43.75 | 43.75 |
| Yulex Natural Rubber Emulsion HA² | | 43.75 |
| Acrylates/Ethylhexyl Acrylate Copolymer-Aq. | 12.5 | 12.5 |

| | | |
|---|---|---|
| ¹ Available from Yulex Corporation, Maricopa, AZ. This material is Hevea latex free and is potassium hydroxide emulsion based. ² Available from Yulex Corporation, Maricopa, AZ. This material is Hevea latex free and is ammonium hydroxide emulsion based. | | |

The adhesive composition according to claims 11 to 19 maybe combined with the following features:
- With the adhesive composition according to claim 13 the gallant is present from about 0.1 wt% to about 5.0 wt%.
- With the adhesive composition according to claims 14 the film forming agent is present from about 10.0 wt% to about 15.0 wt%.
- With the adhesive composition according to claim 15 the plasticizer is present from about 2.0 wt % to about 5.0 wt %.
- With the adhesive composition according to claim 11 may include about 0.01 wt % to about 15.0 wt % of a colorant comprising a pigment selected from the group consisting of iron oxide, carbon black and mixtures thereof.

Further, they maybe a kit, comprising
∘ One or more false eyelashes; and
∘ A sealed container including an adhesive composition comprising
   ▪ About 15.0 wt % to about 40.0 wt % guayule latex solids;
   ▪ About 0.1 wt % to about 20.0 wt % film forming agent;
   ▪ About 0.1 wt % to about 10.0 wt % gellant;
   ▪ About 1.0 wt % to about 9.0 wt % plasticizer; and
   ▪ Water.

## Claims

1. A kit comprising:
a. one or more false eyelashes; and
b. a sealed container including an adhesive composition for attaching said one or more false eyelashes to the eyelids comprising
i. 15.0 wt % to 40.0 wt % guayule rubber latex solids;
ii. 0.1 wt % to 20.0 wt % film forming agent;
iii. 0.1 wt % to 10.0 wt % gellant;
iv. 1.0 wt % to 9.0 wt % plasticizer; and
v. water.

2. The kit according to claim 1 wherein the adhesive composition comprises from 20 wt % to 30.0 wt % guayule rubber latex solids.

3. The kit according to claim 1 wherein said gellant is selected from the group consisting of silica; hydroxyethylcellulose, methylcellulose, hydroxypropylmethylcellulose, hydroxypropylcellulose; cetyl hydroxyethylcellulose; guar gums; quaternized guar gums; nonionic guar gums; xanthan gums; carob gums; scleroglucan gums; gellan gums; rhamsan gums; karaya gums; alginates; maltodextrin; starches; hyaluronic acid and cosmetically acceptable salts thereof; clays; acrylates copolymer; crosslinked polyacrylic acid polymers; polyglyceryl(meth)acrylate polymers; polyvinylpyrrolidone; polyvinyl alcohol; crosslinked acrylamide polymers and copolymers; crosslinked methacryloyloxyethyltrimethylammonium chloride homopolymers; associative polyurethanes; and mixtures thereof.

4. The kit according to claim 1 wherein said film forming agent is selected from the group consisting of cellulosics, polyolefins, polyvinyls, polyacrylates, polyurethanes, silicones, silicone acrylates, polyamides, polyesters, fluoropolymers, polyethers, polyacetates, polycarbonates, polyimides, epoxys, formaldehyde resins and mixtures thereof.

5. The kit according to claim 1 wherein said plasticizer is selected from the group consisting of dibutyl phthalate (DBP), tributyl acetyl citrate, ethyl toluene sulfonamide (ethyl tosylamide), n-cyclohexyl para-toluene sulfonamide, glycerol, butylene glycol, propylene glycol, dipropylene glycol, hexylene glycol, glycol ethers, glycol esters, hydrogenated castor oil, epoxidized oils, polyesters, polybutylenes, low molecular weight aliphatic polyurethanes, toluene sulfonamide urea formaldehyde, γ-butyral lactone, n-butylphthalimide/isopropylphthalimide, ethylhexyl diphenyl phosphate, wool fat derivatives, chlorinated paraffins, glyceryl triacetate, camphor, sucrose acetate isobutyrate (SAIB) and mixtures thereof.

6. The kit according to claim 3, wherein the adhesive composition comprises from 0.1 wt % to 5.0 wt % gellant.

7. The kit according to claim 4, wherein the adhesive composition comprises from 10.0 wt % to 15.0 wt % film forming agent.

8. The kit according to claim 5, wherein the adhesive composition comprises from 2.0 wt % to 5.0 wt % plasticizer.

## Patentansprüche

1. Kit, umfassend:
a. eine oder mehrere falsche Wimpern; und
b. einen abgedichteten Behälter mit einer Klebstoffzusammensetzung zur Befestigung der einen oder mehreren falschen Wimpern an den Augenlidern, umfassend
i. 15,00 Gew.-% bis 40,0 Gew.-% Guayulekautschuklatex-Feststoffe;
ii. 0,1 Gew.-% bis 20,0 Gew.-% Filmbildungsmittel;
iii. 0,1 Gew.-% bis 10,0 Gew.-% Geliermittel;
iv. 1,0 Gew.-% bis 9,0 Gew.-% Weichmacher; und
v. Wasser.

2. Kit nach Anspruch 1, wobei die Klebstoffzusammensetzung 20 Gew.-% bis 30,0 Gew.-% Guayulekautschuklatex-Feststoffe enthält.

3. Kit nach Anspruch 1, wobei das Geliermittel aus der Gruppe ausgewählt wird, die Folgendes umfasst: Kieselerde; Hydroxyethylcellulose, Methylcellulose, Hydroxypropylmethylcellulose, Hydroxypropylcellulose; Cetyl-Hydroxyethylcellulose; Guargummis; quaternisierte Guargummis; nichtionische Guargummis; Xanthangummis; Carobgummis; Scleroglucangummis; Gellangummis; Rhamsangummis; Karayagummis; Alginate; Maltodextrin; Stärken; Hyaluronsäure und kosmetisch akzeptable Salze davon; Tonerden; Acrylat-Copolymere; vernetzte Polyacrylsäure-Polymere; Polyglyceryl(meth)acrylat-Polymere; Polyvinylpyrrolidon; Polyvinylalkohol; vernetzte Acrylamid-Polymere und - Copolymere; vernetzte Methacryloyloxyethyltrimethylammoniumchlorid-Homopolymere; assoziative Polyurethane und Mischungen davon.

4. Kit nach Anspruch 1, wobei das Filmbildungsmittel aus der Gruppe gewählt wird, die Folgendes umfasst: Cellulosematerialien, Polyolefine, Polyvinyle, Polyacrylate, Polyurethane, Silikone, Silikonacrylate, Polyamide, Polyester, Fluorpolymere, Polyether, Polyacetate, Polycarbonate, Polyimide, Epoxidharze, Formaldehydharze und Mischungen davon.

5. Kit nach Anspruch 1, wobei der Weichmacher aus der Gruppe gewählt wird, die Folgendes umfasst: Dibutylphthalat (DBP), Tributylacetylcitrat, Ethyltoluolsulfonamid (Ethyltosylamid), n-Cyclohexyl-para-toluol-sulfonamid, Glycerin, Butylenglycol, Propylenglycol, Dipropylenglycol, Hexylenglycol, Glycolether, Glycolester, hydriertes Rizinusöl, epoxidierte Öle, Polyester, Polybutylene, niedermolekulare aliphatische Polyurethane, Toluolsulfonamid-Harnstoff-Formaldehyd, γ-Butyrallacton, n-Butylphthalimid/Isopropylphthalimid, Ethylhexyldiphenylphosphat, Wollfettderivate, chlorierte Paraffine, Glyceryltriacetat, Kampfer, Saccharoseacetatisobutyrat (SAIB) und Mischungen davon.

6. Kit nach Anspruch 3, wobei die Klebstoffzusammensetzung 0,1 Gew.-% bis 5,0 Gew.-% Geliermittel umfasst.

7. Kit nach Anspruch 4, wobei die Klebstoffzusammensetzung 10,0 Gew.-% bis 15,0 Gew.-% Filmbildungsmittel umfasst.

8. Kit nach Anspruch 5, wobei die Klebstoffzusammensetzung 2,0 Gew.-% bis 5,0 Gew.-% Weichmacher umfasst.

## Revendications

1. Un kit comprenant :
a. un ou plusieurs faux-cils ; et
b. une boîte fermée incluant une composition adhésive pour fixer ce ou ces faux-cils aux paupières, comprenant :
i. 15,0% en poids à 40,0% en poids de solides de latex de caoutchouc de guayule ;
ii. 0,1 % en poids à 20,0% en poids d'agent filmogène ;
iii. 0,1 % en poids à 10,0% en poids de gélifiant ;
iv. 1,0% en poids à 9,0% en poids de plastifiant ; et
v. eau.

2. Le kit selon la revendication 1 où la composition adhésive comprend de 20% en poids à 30,0% en poids de solides de latex de caoutchouc de guayule.

3. Le kit selon la revendication 1 où ledit gélifiant est sélectionné à partir du groupe se composant de silicium, d'hydroxyéthylcellulose, de méthyl cellulose, d'hydroxy-propyl-méthyl cellulose, d'hydroxypropyl cellulose, de cétyl hydroxy-éthyl cellulose ; de gommes de guar ; de gommes de guar non-ioniques ; de gomme de xanthane ; de gommes de caroube, de gommes de scléroglucane ; de gommes de gellane ; gommes de rhamsane ; gommes karaya ; d'alginates ; de maltodextrine ; de l'amidon ; de l'acide hyaluronique et des sels admis en cosmétique ; des argiles ; des copolymères d'acrylates ; des polymères acides polyacryliques réticulés ; des polymères polyglycéryl(méth)acrylate ; du polyvinyle-pyrrolidone ; de l'alcool polyvinyle ; des polymères acrylamides réticulés et des copolymères ; des homopolymères chloride méthacryloyloxyéthyltriméthylammonium ; des polyuréthannes associatifs et des mélanges de ces éléments.

4. Le kit selon la revendication 1 où ledit filmogène est sélectionné à partir du groupe se composant de cellulosiques, polyoléfines, polyvinyles, polyacrylates, polyuréthannes, silicones, acrylates silicones, polyamides, polyesters, fluoropolymères, polyéthers, polyacétates, polycarbonates, polyimides, epoxys, résines formaldéhydes et mélanges de ces éléments.

5. Le kit selon la revendication 1 où ledit plastifiant est sélectionné à partir du groupe se composant de dibutyl phthalate (DBP), tributyl acétyl citrate, éthyl toluène sulfonamide (éthyl tosylamide), n-cyclohéxyl para-toluène sulfonamide, glycérol, glycol butylène, glycol propylène, glycol dipropylène, glycol héxylène, glycol éthers, glycol esters, huile de castor hydrogénée, huiles epoxidisées, polyesters, polybutylènes, polyuréthannes aliphatiques à faible poids moléculaire, toluène sulfonamide urée formaldéhyde, y-butyral lactone, n-butylphthalimide / isopropylphthalimide, phosphate d'éthylhéxyl diphényl, dérivés de graisse de laine, paraffines chlorées, triacétate de glycéryl, camphre, isobutyrate d'acétate de sucrose (SAIB) et des mélanges de ces éléments.

6. Le kit selon la revendication 3, où la composition adhésive comprend de 0,1% de poids à 5,0% de poids de gélifiant.

7. Le kit selon la revendication 4, où la composition adhésive comprend de 10,0% de poids à 15,0% de poids d'agent filmogène.

8. Le kit selon la revendication 5, où la composition adhésive comprend de 2,0% de poids à 5,0% de poids de plastifiant.
